# FASCICULE DE BREVET EUROPEEN

(11) **EP 2 993 266 B1**
(45) Date de publication et mention de la délivrance du brevet: **27.03.2019**
(21) Numéro de dépôt: 15181814.3
(22) Date de dépôt: 20.08.2015
(51) Int. Cl.: E01B 29/16, B60F 1/04, B60P 3/40

(54) **SYSTEME ET PROCEDE DE TRANSPORT D'UN EQUIPEMENT**
SYSTEM UND VERFAHREN ZUM TRANSPORT EINER AUSRÜSTUNG
SYSTEM AND METHOD FOR TRANSPORTING EQUIPMENT

(30) Priorité: 02.09.2014 FR 1458187
(43) Date de publication de la demande: 09.03.2016
(73) Titulaire: SNCF RESEAU, 93418 La Plaine Saint-Denis CEDEX (FR); CIPAL, 44140 Le Bignon (FR)
(72) Inventeur: HAUTBOIS, Patrice, 49170 SAINT GEORGES sur LOIRE (FR); GERNIGON, Patrick, 78260 ACHERES (FR); DE FAUCAL, Eric, 85170 BELLEVILLE SUR VIE (FR); BOUYSSET, Christian, 85170 DOMPIERRE sur YON (FR)
(74) Mandataire: Argyma

(56) Documents cités:
- WO-A1-2005/098138
- DE-A1- 2 313 055
- FR-A1- 2 536 770
- US-A- 4 050 589

## Description

### DOMAINE TECHNIQUE GENERAL ET ART ANTERIEUR

La présente invention concerne le domaine du transport et de l'installation d'un équipement, en particulier, un équipement ferroviaire (rail, coeur d'aiguillage, etc.) lors du renouvellement d'une voie de chemin de fer.

Une voie de chemin de fer, appelée également voie ferroviaire, s'étend longitudinalement et comprend deux rails longitudinaux reposant sur des traverses transversales. Du fait de l'usure induite par la circulation de véhicules ferroviaires sur la voie ferroviaire, il est nécessaire de remplacer de manière périodique les rails longitudinaux usés par des rails longitudinaux neufs.

En référence à la demande de brevet FR 2847917A1, il est connu d'utiliser un train ferroviaire (train-travaux) pour stocker les rails longitudinaux neufs et les installer dans une zone de maintenance de la voie ferroviaire. Lors de son utilisation, un tel train ferroviaire présente l'inconvénient d'occuper une voie ferroviaire adjacente à la voie ferroviaire à renouveler. Cela est pénalisant lorsque deux gares ne sont reliées que par deux voies ferroviaires adjacentes, toute circulation entre les gares est alors interdite, ce qui présente une gêne importante ainsi qu'un manque à gagner pour les exploitants du réseau ferré. Du fait de ces inconvénients, les opérations de renouvellement d'une voie ferroviaire ne sont réalisées qu'au cours de la nuit, ce qui allonge de manière importante la durée des opérations de renouvellement.

L'invention a donc pour but de remédier à ces inconvénients en proposant un procédé de transport et d'installation d'un équipement qui soit pratique et rapide à mettre en oeuvre.

L'invention est née dans le domaine ferroviaire mais elle peut s'appliquer à tout domaine nécessitant le transport d'un équipement, de préférence, un équipement longitudinal dont la masse est élevée.

On connaît par la demande de brevet US-A-4050589 un système de transport d'un équipement qui comprend une poutre structurale portée par deux unités mobiles. Chaque unité mobile comporte un anneau de connexion à la poutre structurale.

### PRESENTATION GENERALE DE L'INVENTION

A cet effet, l'invention concerne un système de transport d'un équipement, en particulier un rail ferroviaire, le système de transport comprenant :
- au moins une poutre structurale adaptée pour supporter un équipement, ladite poutre structurale comportant un corps longitudinal comprenant une première extrémité de connexion et une deuxième extrémité de connexion et des moyens de liaison adaptés pour être reliés audit équipement, et
- au moins une première unité mobile et une deuxième unité mobile indépendantes, chaque unité mobile comportant un châssis et au moins un organe de connexion monté mobile par rapport audit châssis, l'organe de connexion de la première unité mobile et l'organe de connexion de la deuxième unité mobile étant adaptés pour se connecter respectivement à la première extrémité de connexion et à la deuxième extrémité de connexion de la poutre structurale afin de la supporter, chaque unité mobile comprenant en outre des moyens de déplacement routier aptes à permettre le déplacement dudit châssis sur une route ou analogue.

Un tel système de transport possède un encombrement limité par comparaison à un train-travaux comportant une grue de levage. En outre, étant donné que les unités mobiles sont indépendantes et équipées de moyens de déplacement routier, les équipements peuvent être transportés directement depuis leurs lieux de stockage, ce qui est avantageux. Il n'est pas nécessaire de charger de manière préalable le train-travaux comme dans l'art antérieur.

De préférence, chaque unité mobile comporte en outre des moyens de déplacement ferroviaire aptes à permettre le déplacement dudit châssis sur une voie ferroviaire. De tels moyens de déplacement permettent ainsi aux unités mobiles de circuler, d'une part, sur les routes, chemins et banquettes et, d'autre part, sur une voie ferroviaire afin de transporter un équipement sur de longues distances. Un tel système de transport est particulièrement avantageux pour réaliser des opérations de maintenance d'une voie ferroviaire.

De manière préférée, chaque unité mobile comporte un module de pilotage synchronisé apte à coordonner le déplacement de la deuxième unité mobile par rapport au déplacement de la première unité mobile. Autrement dit, le module de pilotage permet d'asservir les moyens de déplacement des unités mobiles. Ainsi, la poutre se déplace de manière homogène sans risque d'endommagement en restant maintenue à ses deux extrémités. De préférence, le module de pilotage synchronisé permet un déplacement automatisé de la poutre structurale, c'est-à-dire, sans intervention humaine.

Selon un aspect préféré, le module de pilotage synchronisé est apte à coordonner le déplacement de l'organe de connexion de la deuxième unité mobile par rapport au déplacement de l'organe de connexion de la première unité mobile. Ainsi, la poutre demeure horizontale en toutes circonstances, ce qui évite de déplacer le centre de gravité de l'équipement au cours de son transport. Autrement dit, le module de pilotage permet d'asservir les organes de connexion des unités mobiles.

De préférence, chaque unité mobile comporte un module d'activation adapté pour déplacer les moyens de déplacement ferroviaire entre une position haute dans laquelle lesdits moyens de déplacement ferroviaire s'étendent au-dessus des moyens de déplacement routier et une position basse dans laquelle lesdits moyens de déplacement ferroviaire s'étendent en-dessous des moyens de déplacement routier. Ainsi, le module d'activation permet de sélectionner les moyens de déplacement qui sont en contact avec le sol pour permettre le déplacement de l'unité mobile. De manière préférée, le module d'activation est un bras articulé reliant le châssis aux moyens de déplacement ferroviaire.

Selon un aspect préféré, chaque unité mobile comporte un module de stabilisation adapté pour surélever les moyens de déplacement routier et les moyens de déplacement ferroviaire par rapport au sol. Ainsi, chaque unité mobile demeure stable lors du déplacement de la poutre et/ou de l'équipement, ce qui garantit un déplacement précis, sans risque d'endommagement dudit équipement.

L'invention concerne également un procédé de transport d'un équipement ferroviaire depuis une zone de stockage, située en dehors d'une voie ferroviaire, jusqu'à une zone de maintenance d'une voie ferroviaire au moyen d'un système de transport tel que présenté précédemment, l'équipement ferroviaire étant relié à la poutre structurale, la poutre structurale étant supportée à ses extrémités de connexion par les unités mobiles, le procédé comprenant :
- une étape de déplacement dudit équipement ferroviaire de la zone de stockage jusqu'à la voie ferroviaire grâce aux moyens de déplacement routier desdites unités mobiles, et
- une étape de déplacement dudit équipement ferroviaire sur la voie ferroviaire jusqu'à la zone de maintenance grâce aux moyens de déplacement ferroviaire desdites unités mobiles.

Ainsi, l'équipement ferroviaire est transporté directement depuis sa zone de stockage jusqu'à la zone de maintenance, ce qui procure un gain de temps. L'utilisation de deux types de moyens de déplacement permet d'optimiser le déplacement en fonction de la voie de circulation.

De préférence, le procédé comporte une étape de stabilisation de chaque unité mobile dans ladite zone de maintenance. De préférence encore, le procédé comporte une étape de libération dudit équipement ferroviaire dans ladite zone de maintenance. Ainsi, l'équipement ferroviaire peut être déposé de manière précise, sans risque d'endommagement.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique générale d'un système de transport selon l'invention lors du transport d'un rail ferroviaire ;
- la figure 2 est une représentation schématique d'une unité mobile du système de transport selon l'invention ;
- la figure 3 est une représentation schématique du transport d'un rail ferroviaire d'une zone de stockage à une zone de maintenance ;
- la figure 4 est une représentation schématique de la livraison par un véhicule routier des unités mobiles et de la poutre structurale du système de transport selon l'invention ;
- la figure 5 est une représentation schématique du système de transport selon l'invention lors de son positionnement au-dessus d'un rail ferroviaire neuf dans la zone de stockage ;
- la figure 6 est une représentation schématique du transport du rail ferroviaire neuf depuis la zone de stockage vers la voie ferroviaire ;
- la figure 7 est une première représentation schématique d'une unité mobile lors de son accès à la voie ferroviaire ;
- la figure 8 est une deuxième représentation schématique d'une unité mobile lors de son accès à la voie ferroviaire ;
- la figure 9 est une représentation schématique d'une étape d'activation des moyens de déplacement ferroviaire de l'unité mobile sur la voie ferroviaire ;
- la figure 10 est une représentation schématique de l'unité mobile sur la voie ferroviaire dont les moyens de déplacement ferroviaire sont en position active;
- la figure 11 est une représentation schématique d'une étape de transport d'un rail ferroviaire neuf sur la voie ferroviaire jusqu'à la zone de maintenance ;
- la figure 12 est une représentation schématique d'une étape de positionnement de la poutre structurale du système de transport au-dessus d'un rail ferroviaire usé à remplacer dans la zone de maintenance ;
- la figure 13 est une représentation schématique d'une étape d'activation des moyens de stabilisation de l'unité mobile sur la voie ferroviaire ;
- la figure 14 est une représentation schématique d'une étape de déplacement en attente du rail ferroviaire usé dans la zone de maintenance ;
- la figure 15 est une représentation schématique d'une étape de positionnement du rail ferroviaire neuf en lieu et place du rail ferroviaire usé ; et
- la figure 16 est une représentation schématique d'une étape de transport du rail ferroviaire usé sur la voie ferroviaire depuis la zone de maintenance jusqu'à la zone de stockage.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

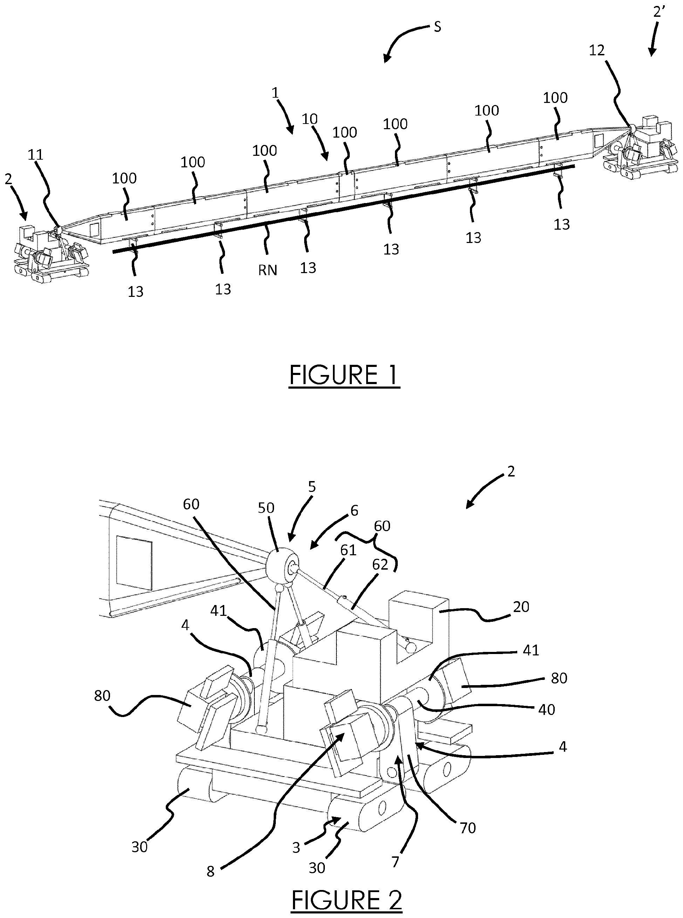

En référence à la figure 1, il est représenté de manière schématique un système de transport d'un équipement selon l'invention. L'invention va être présentée pour le transport d'un rail ferroviaire mais il va de soi que l'invention s'applique de manière générale à tout équipement, en particulier, un équipement de longueur importante et de masse élevée.

En référence à la figure 1, le système de transport S comporte une unique poutre structurale 1 pour supporter un équipement et deux unités mobiles indépendantes 2, 2' adaptées pour porter la poutre structurale 1 par ses extrémités afin de la déplacer.

La poutre de support 1 est dite structurale car elle permet de faire transiter des efforts mécaniques importants et, en particulier, supporter un équipement de masse élevée. Toujours en référence à la figure 1, la poutre structurale 1 comporte un corps longitudinal 10 comprenant une première extrémité de connexion 11 et une deuxième extrémité de connexion 12. De préférence, le corps longitudinal 10 possède une longueur importante afin de supporter des équipements de grande longueur tels que des rails longitudinaux. A titre d'exemple, la poutre structurale 1 peut posséder une longueur de l'ordre de 30 mètres.

En référence à la figure 1, la première extrémité de connexion 11 et la deuxième extrémité de connexion 12 sont adaptées pour se connecter aux unités mobiles 2, 2' du système de transport S. Selon l'invention, chaque extrémité de connexion 11, 12 présente une forme sensiblement sphérique afin de former une liaison rotule avec les unités mobiles 2, 2' de manière à limiter toute contrainte liée au débattement de la poutre 1 lors de son déplacement. Ainsi, la poutre de support 1 est équilibrée verticalement de manière automatique même si les unités mobiles 2, 2' sont inclinées du fait d'un nivellement du sol. Selon un aspect non relatif à l'invention, d'autres types d'extrémités de connexion 11, 12 pourraient également convenir, par exemple, des chapes, des liaisons articulées par des axes goupillés, etc.

De manière avantageuse, une extrémité de connexion comportant une chape en forme de U montée sur un pivot libre ainsi qu'une liaison articulée permettent de former une liaison rotule de manière pratique afin de limiter le débattement de la poutre structurale 1 comme cela sera présenté par la suite. Une extrémité de connexion sphérique est particulièrement avantageuse étant donné qu'elle possède un coût de revient limité.

De telles extrémités de connexion 11, 12 permettent de supporter la poutre de support 1 par ses extrémités afin d'optimiser la répartition des efforts induits par l'équipement sur toute la longueur du corps longitudinal 10. Ainsi, la poutre de support 1 peut supporter un équipement de masse élevée sans risque de rupture tout en possédant une longueur réduite.

Le corps longitudinal 10 de la poutre de support 1 possède une résistance importante, en particulier au flambage, pour une masse réduite. De préférence, le corps longitudinal 10 de la poutre de support 1 est creux. De manière avantageuse, le corps longitudinal 10 comporte une enveloppe de protection afin d'éviter tout risque de blessure d'un opérateur lors de la manutention de la poutre de support 1.

En référence à la figure 1, la poutre de support 1 comporte une pluralité d'éléments de liaison 13, répartis le long dudit corps longitudinal 10, qui sont adaptés pour être reliés à l'équipement afin de le suspendre audit corps longitudinal 10. Autrement dit, la pluralité d'éléments de liaison 13 forme des moyens de mouflage ou d'équilibrage de contraintes, c'est-à-dire, des moyens de levage d'une charge selon plusieurs zones écartées les unes des autres et permettant une répartition des efforts dans la charge manutentionnée.

De préférence, au moins une pluralité d'éléments de liaison 13 sont mobiles selon la longueur du corps longitudinal 10 de manière à pouvoir placer les éléments de liaison 13 de manière adaptable en fonction de la forme et de la répartition massique de chaque équipement à porter. De manière préférée, le déplacement des éléments de liaison 13 est motorisé et, de préférence, piloté par un opérateur.

Dans cet exemple de réalisation, chaque élément de liaison 13 se présente sous la forme d'une boucle flexible adaptée pour être passé sous l'équipement afin de le soulever. Il va de soi que les éléments de liaison 13 pourraient se présenter sous une forme différente, en particulier, des élingues, un palonnier, des pinces ou autres accessoires de levage.

De tels éléments de liaison 13 permettent de supporter des équipements ferroviaires tels que des demi-aiguillages, des coeurs d'aiguillage et, ce, indépendamment de leur masse et/ou de la position de leur centre de gravité. En outre, lors du support, la forme, les dimensions et l'état de surface de l'équipement ne sont pas affectés, ce qui est très avantageux.

De manière préférée, en référence à la figure 1, le corps longitudinal 10 de la poutre de support 1 comprend une pluralité de modules structuraux 100 reliés les uns aux autres de manière amovible et ajustables en longueur. Dans cet exemple, le corps longitudinal 10 de la poutre de support 1 comporte 7 modules 100 mais il va de soi que le nombre de modules 100 pourrait être différent.

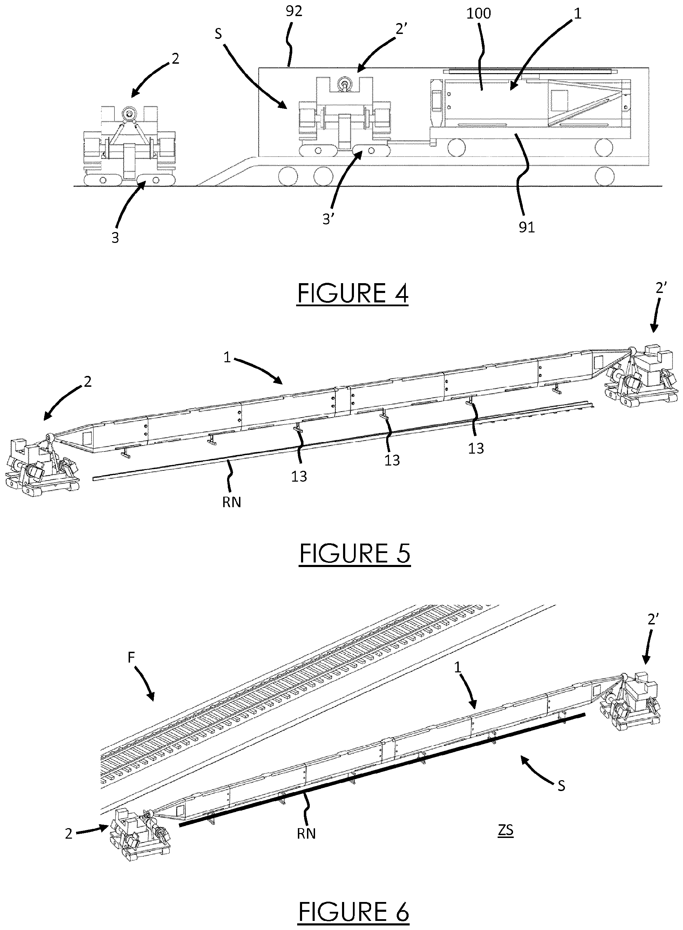

De manière avantageuse, la longueur d'un module structural 100 est inférieure à 10 mètres afin de permettre le stockage d'un tel module structural dans un camion semi-remorque de catégorie 1 comme illustré à la figure 4.

En référence à la figure 1, il est représenté deux unités mobiles 2, 2' qui sont indépendantes, c'est-à-dire, qu'elles peuvent se déplacer indépendamment l'une de l'autre.

Dans cet exemple de réalisation, la première unité mobile 2 et la deuxième unité mobile 2' sont identiques et se présentent chacune sous la forme d'un automate robotisé. Aussi, par souci de concision et de clarté, seule la première unité mobile 2 sera décrite en détails. Par la suite, les éléments relatifs à la deuxième unité mobile 2' seront référencés avec une apostrophe.

En référence à la figure 2, chaque unité mobile 2 comporte un châssis structural 20 et un organe de connexion 5 monté mobile par rapport audit châssis 20 par l'intermédiaire d'un module de positionnement 6 reliant ledit organe de connexion 5 au châssis structural 20. Dans cet exemple, chaque unité mobile 2 est configurée pour supporter individuellement une charge qui est fonction de la masse des équipements à déplacer.

Selon l'invention, l'organe de connexion 5 se présente sous la forme d'un anneau de connexion 50 dont l'ouverture est adaptée pour coopérer avec une extrémité de connexion 11, 12 de forme sensiblement sphérique de la poutre structurale 1. Un tel anneau de connexion 50 présente comme avantages de maintenir automatiquement dans un plan vertical la poutre structurale 1 et les équipements supportés indépendamment de la position des unités mobiles 2 et 2'. De manière avantageuse, l'anneau de connexion 50 est une solution économique.

De manière avantageuse, le module de positionnement 6 est configuré pour permettre le déplacement dans l'espace selon trois directions orthogonales dudit organe de connexion 5 ainsi que son orientation. Autrement dit, l'ouverture de l'anneau de connexion 50 peut être paramétrée de manière précise selon les souhaits de l'opérateur grâce au module de positionnement 6.

Dans cet exemple de réalisation, en référence à la figure 2, le module de positionnement 6 de l'unité mobile 2 comporte trois vérins de positionnement 60 comportant chacun un cylindre de vérin 62, relié au châssis structural 20, et une tige de vérin 61, reliée audit organe de connexion 5, qui est montée dans ledit cylindre de vérin 62. L'utilisation de trois vérins de positionnement 60 permet de définir de manière simple et pratique la position de l'organe de connexion 5 à la manière d'un tripode. En outre, l'utilisation d'un tel module de positionnement 6 permet d'optimiser la répartition des efforts reçus par l'organe de connexion 5 dans le châssis structural 20 (répartition en trois points). Dans cet exemple de mise en oeuvre, le module de positionnement 6 permet une course de déplacement optimisée qui dépend des conditions de travail sur des voies ferroviaires. Il va de soi que la course de déplacement dépend des normes en vigueur du domaine d'utilisation du système de transport.

De manière préférée, le module de positionnement 6 comporte au moins un capteur de position, de préférence un capteur de position par vérin de positionnement 60. Le module de positionnement 6 permet de déterminer de manière continue la position et l'orientation de l'organe de connexion 5. En outre, le module de positionnement 6 comporte des moyens de motorisation afin de commander le déplacement des vérins de positionnement 60. De préférence, les moyens de motorisation du module de positionnement 6 sont commandables afin de recevoir des instructions de la part d'un opérateur ou d'un module de pilotage.

De manière avantageuse, le module de positionnement 6 permet un positionnement multiaxes, en particulier, selon trois axes.

Il va de soi que le module de positionnement 6 pourrait se présenter sous une autre forme, par exemple, sous la forme d'un mécanisme à emboîtement, un mécanisme télescopique au moyen de chaînes ou de câbles, un portique à palans ou analogue.

Selon l'invention, en référence à la figure 2, l'unité mobile 2 comporte des moyens de déplacement routier 3 qui se présentent dans cet exemple sous la forme de chenilles 30 montées sous le châssis structural 20 mais il va de soi que des roues ou analogues pourraient également convenir. De tels moyens de déplacement routier 3 permettent à l'unité mobile 2 de se déplacer sur une route goudronnée, sur du ballast ou sur de la terre de manière stable.

De manière préférée, les moyens de déplacement routier 3 comportent de préférence des moyens de motorisation autonome. De préférence, lesdits moyens de motorisation sont commandables afin de recevoir des instructions de la part d'un opérateur ou d'un module de pilotage.

Toujours en référence à la figure 2, l'unité mobile 2 comporte en outre des moyens de déplacement ferroviaire 4 qui se présentent dans cet exemple sous la forme de deux essieux 40 équipés chacun de deux roues 41 afin de pouvoir se déplacer sur une voie ferroviaire à la manière d'un véhicule ferroviaire classique.

De manière préférée, les moyens de déplacement ferroviaire 4 comportent des moyens de motorisation autonome. De préférence, lesdits moyens de motorisation sont commandables afin de recevoir des instructions de la part d'un opérateur ou d'un module de pilotage.

De manière préférée, l'unité mobile 2 comporte un module d'activation 7 adapté pour déplacer les moyens de déplacement ferroviaire 4 entre :
- une position haute dans laquelle les moyens de déplacement ferroviaire 4 sont situés au-dessus des moyens de déplacement routier 3 et
- une position basse dans laquelle les moyens de déplacement ferroviaire 4 sont situés en-dessous des moyens de déplacement routier 3.

En référence à la figure 2, le module d'activation 7 se présente sous la forme d'un bras d'activation 70 dont une première extrémité est reliée solidairement à un essieu 40 des moyens de déplacement ferroviaire 4 et dont une deuxième extrémité est articulée au châssis 20 de l'unité mobile 2. L'unité mobile 2 comporte un bras d'activation 70 associé à chaque essieu 40.

En référence à la figure 2 représentant les moyens de déplacement ferroviaire 4 en position haute, les roues ferroviaires 41 sont relevées et situées au-dessus des chenilles 30. Ainsi, l'unité mobile 2 ne peut se déplacer qu'à l'aide de ses chenilles 30.

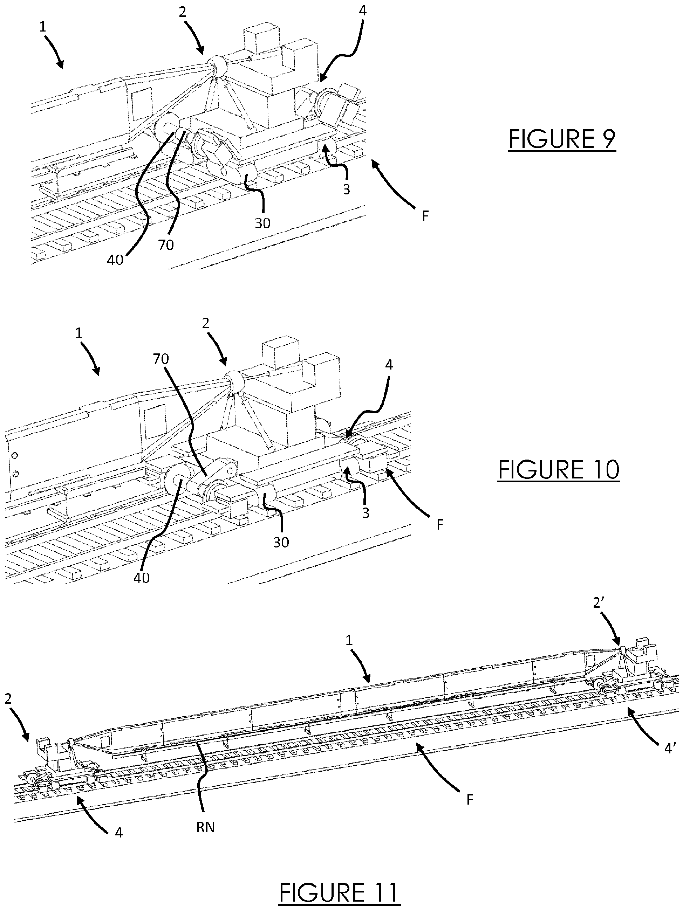

A l'inverse, en référence à la figure 10 représentant les moyens de déplacement ferroviaire 4 en position basse, les roues ferroviaires 41 sont abaissées et situées en-dessous des chenilles 30. Ainsi, l'unité mobile 2 ne peut se déplacer qu'à l'aide de ses roues ferroviaires 41.

De manière préférée, le bras d'activation 70 est motorisé afin de permettre un déplacement aisé et rapide de chaque essieu 40 entre sa position haute et basse. De préférence, chaque bras d'activation 70 est commandable afin de recevoir des instructions de la part d'un opérateur ou d'un module de pilotage.

De manière préférée, chaque unité mobile 2 comporte en outre un module de stabilisation 8 adapté pour surélever le châssis 20 par rapport au sol afin d'éviter que les moyens de déplacement routier 3 ou les moyens de déplacement ferroviaire 4 soient en contact avec le sol.

Dans cet exemple de réalisation, le module de stabilisation 8 comporte quatre vérins de stabilisation 80 qui sont montés aux extrémités des essieux 40 des moyens de déplacement ferroviaire 4. Autrement dit, le module de stabilisation 8 ne peut être activé que lorsque les essieux 40 sont en position basse. De préférence, les vérins de stabilisation 80 sont répartis à la périphérie du châssis structural 20 afin d'assurer une stabilisation homogène de ce dernier. Chaque vérin de stabilisation 80 est adapté pour se déployer verticalement.

De manière préférée, le module de stabilisation 8 comporte des vérins de stabilisation hydrauliques 80 mais il va de soi qu'ils pourraient se présenter sous des formes diverses, par exemple, des stabilisateurs gonflables, des contrepoids ou analogues afin d'assurer la stabilité des unités mobiles 2, 2' suivant les différentes configurations de terrain rencontrées.

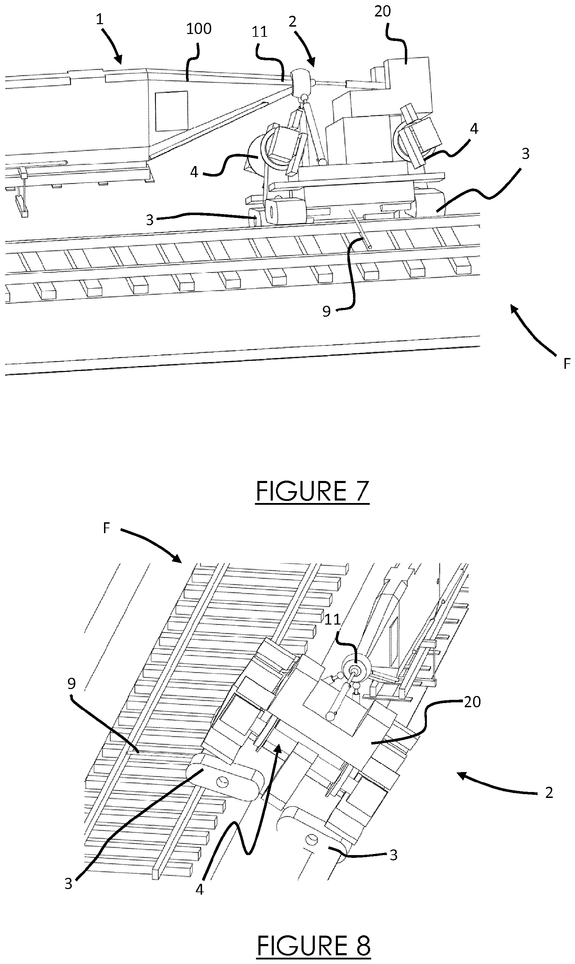

De manière préférée, chaque unité mobile 2 comporte en outre des moyens de détection de la position d'une voie ferroviaire. Dans cette forme de réalisation, en référence aux figures 7 et 8, les moyens de détection se présentent sous la forme d'un capteur 9 détectant la proximité de la voie ferroviaire et assurant la position de l'engin par rapport à ladite voie. Chaque capteur 9 est apte à s'étendre depuis le châssis 20 de l'unité mobile 2 afin d'entrer en contact avec un rail de la voie ferroviaire de manière à connaître la distance séparant le châssis 20 dudit rail ferroviaire.

Pour des cas particuliers de mises en voies des unités mobiles 2, 2', des moyens complémentaires sont mis à disposition de l'opérateur pour l'aider dans ses manoeuvres, par exemple, une caméra.

De manière avantageuse, chaque unité mobile 2 comporte en outre un module de pilotage apte à commander de manière centrale les organes et les modules d'une unité mobile. Le module de pilotage se présente de manière préférée sous la forme d'un calculateur et connaît l'état des différents organes et capteurs par l'intermédiaire d'une pluralité de capteurs.

Le module de pilotage est apte à communiquer avec un autre module de pilotage d'une autre unité mobile 2 afin de permettre de coordonner le déplacement desdites unités mobiles 2, 2' et/ou coordonner le positionnement de leurs organes de connexion 5, 5'. Un tel module de pilotage est avantageux pour maintenir la poutre structurale 1 horizontale lors du déplacement des unités mobiles 2, 2' sur des terrains accidentés ou avec du relief.

Selon un aspect préféré de l'invention, le module de pilotage comporte une interface opérateur qui comporte par exemple des manettes et des boutons pour piloter l'unité mobile 2. De manière préférée, le module de pilotage comporte une interface de communication sans fil (Infrarouge, GSM, etc.) afin de permettre à un opérateur de piloter l'unité mobile 2 par l'intermédiaire d'une télécommande sans fil.

Les différents organes et modules de l'unité mobile 2 sont alimentés par un module d'alimentation électrique, monté dans le châssis 20, afin de limiter les nuisances sonores. Néanmoins, il va de soi que le module d'alimentation pourrait être thermique. De préférence, le module d'alimentation est redondé afin d'améliorer la fiabilité de l'unité mobile 2.

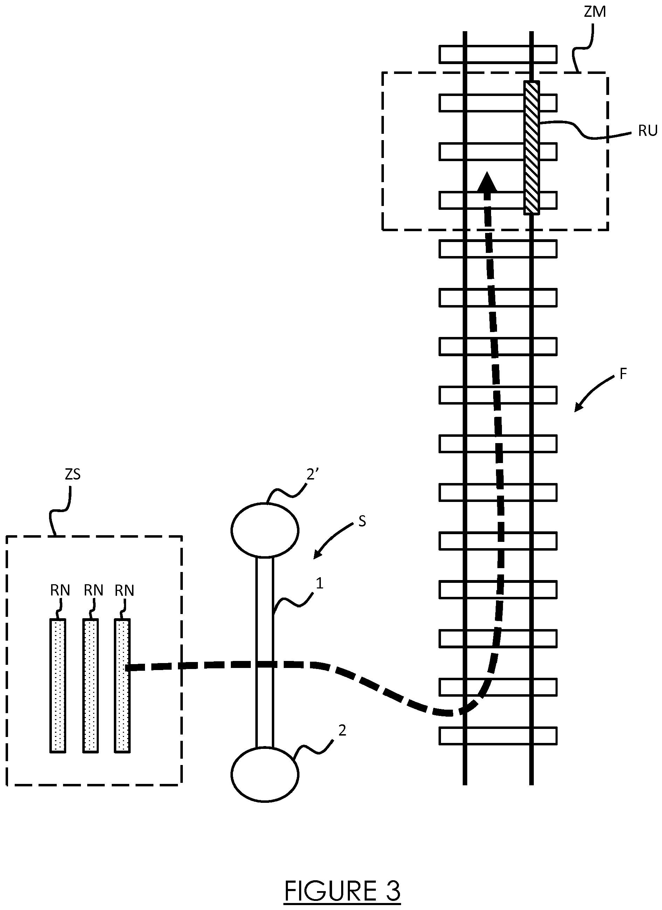

Un exemple de mise en oeuvre de l'invention va être maintenant présenté pour la maintenance d'une voie ferroviaire. En référence à la figure 3, une voie ferroviaire F comporte une zone de maintenance ZM dans laquelle un rail ferroviaire usé RU doit être remplacé par un rail ferroviaire neuf RN. Dans cet exemple de mise en oeuvre, seuls deux opérateurs sont nécessaires.

Les rails ferroviaires neuf RN sont entreposés dans une zone de stockage ZS située à distance de la voie ferroviaire F. De manière préférée, la zone de stockage ZS correspond à une zone dite de «service» accessible par un véhicule poids lourd de catégorie 1 afin de permettre, d'une part, la livraison de rails ferroviaires neufs RN et, d'autre part, la livraison du système de transport S selon l'invention.

Dans cet exemple, en référence à la figure 3, la zone de stockage ZS est séparée de la voie ferroviaire F par un chemin recouvert de ballast et de terre. De plus, la voie ferroviaire F est bordée par une banquette, c'est-à-dire, un talus qui surélève la voie ferroviaire F par rapport à la zone de stockage ZS.

En référence à la figure 4, il est représenté un système de transport S comprenant une première unité mobile 2, une deuxième unité mobile 2' et une poutre structurale 1 sous forme de modules. De manière avantageuse, le système de transport S possède un encombrement réduit lors de son transport, ce qui permet sa livraison à une grande variété de zones de stockage ZS.

Dans cet exemple de mise en oeuvre, en référence à la figure 4, la poutre structurale 1 est disposée sur un chariot 91 stocké dans un véhicule routier 92. Le chariot 91 est relié à la deuxième unité mobile 2' afin de pouvoir être déplacé de manière pratique. Ainsi, lors de la livraison du système de transport S par le véhicule routier 92, la première unité mobile 2 et la deuxième unité mobile 2' descendent du véhicule 92 grâce à leurs moyens de déplacement routier 3, 3', la deuxième unité mobile 2' tirant avec elle le chariot 91 sur lequel est stockée la poutre structurale 1.

La poutre structurale 1 est ensuite assemblée, de préférence avec l'aide des unités mobiles 2, 2', afin que la poutre structurale 1 s'étende horizontalement à distance du sol. De préférence, des jambages (non représentés) sont utilisés pour supporter la poutre structurale 1 lors de son assemblage.

Ensuite, les unités mobiles 2, 2' se déplacent pour se connecter aux extrémités 11, 12 de la poutre structurale 1. Après connexion, la poutre structurale 1 est portée par les unités mobiles 2, 2'. De manière préférée, le déplacement de chaque unité mobile 2, 2' au voisinage de son extrémité de connexion 11, 12 est réalisée sous la commande d'un opérateur équipé d'une télécommande qui envoie des ordres au module de pilotage de chaque unité mobile 2, 2'. De même, le déplacement de chaque organe de connexion 5 pour se connecter à une extrémité de connexion 11, 12 de la poutre structurale 1 est réalisée par un opérateur équipé d'une télécommande qui agit sur le module de positionnement 6 via le module de pilotage.

Une fois la poutre structurale 1 supportée par les unités mobiles 2, 2', les jambages de support de la poutre structurale 1 peuvent être retirés. Le système de transport S forme ainsi un ensemble qui peut être déplacé de manière coordonnée par un opérateur à l'aide d'une télécommande.

Dans cet exemple, les déplacements des unités mobiles 2, 2' sont coordonnés, la première unité mobile 2 remplissant un rôle de « maître » tandis que la deuxième unité mobile 2' remplit un rôle d' « esclave » qui est asservi aux déplacements du « maître ». Ainsi, il suffit à l'opérateur de commander la première unité mobile 2 pour que la deuxième unité mobile 2' se déplace pour suivre la première unité mobile 2 tout en maintenant la poutre structurale 1.

De manière détaillée, chaque module de pilotage synchronisé permet de coordonner, d'une part, les moyens de déplacement routier 3 ou ferroviaire 4 mais également les moyens de positionnement 6 de l'organe de connexion 5 afin que la poutre structurale 1 demeure alignée horizontalement. Une telle synchronisation permet de limiter et de maîtriser les efforts mécaniques reçus par les unités mobiles 2, 2' lors du déplacement de la poutre structurale 1, en particulier, quand cette dernière est reliée à un rail ferroviaire.

En référence à la figure 5, le système de transport S est déplacé de manière à ce que la poutre structurale 1 s'étende au-dessus du rail ferroviaire neuf RN qui doit être transporté. Les moyens de liaison 13 de la poutre structurale 1 sont ensuite reliés au rail ferroviaire neuf RN de manière à ce que ce dernier soit supporté par la poutre structurale 1 selon toute sa longueur.

En référence à la figure 6, le système de transport S est déplacé de la zone de stockage ZS jusqu'à la voie ferroviaire F. Dans cet exemple de mise en oeuvre, le système de transport S doit franchir une banquette pour atteindre la voie ferroviaire F. Autrement dit, chaque unité mobile 2, 2' est inclinée lors de l'ascension de la banquette. A cet effet, la position de l'organe de connexion 5, 5' de chaque unité mobile 2, 2' est réglée par le module de positionnement et le module de pilotage afin que la poutre structurale 1 demeure stable et horizontale malgré l'inclinaison des châssis 20, 20' des unités mobiles 2, 2'.

Le déplacement de la première unité mobile 2 sur la banquette en bordure de voie ferroviaire F est représenté aux figures 7 et 8. Lorsque la première unité mobile 2 atteint un des rails de la voie ferroviaire F, celle-ci détecte la position de l'autre desdits rails de la voie ferroviaire F au moyen du capteur de pression 9. Grâce à la connaissance de la position des deux rails de la voie ferroviaire F, la première unité mobile 2 peut s'orienter de manière précise sur la voie ferroviaire F afin de préparer l'activation de ses moyens de déplacement ferroviaire 4. En pratique, le déplacement de la première unité mobile 2 sur la voie ferroviaire F est réalisé de manière à ce que les essieux 40 de la première unité mobile 2 s'étendent orthogonalement aux rails de la voie ferroviaire F comme illustré à la figure 9.

De manière préférée, les unités mobiles 2, 2' accèdent aux rails de la voie ferroviaire F de manière successive afin d'améliorer la stabilité de la poutre. Néanmoins, il va de soi que les unités mobiles 2, 2' pourraient accéder aux rails de la voie ferroviaire F de manière simultanée.

En pratique, les organes de connexion 5, 5' sont déplacés de manière coordonnée pour maintenir la poutre structurale 1 sensiblement horizontale lors de l'accession successive des unités mobiles 2, 2' à ladite voie ferroviaire F. Après accession, les moyens de déplacement routier 3, c'est-à-dire les chenilles 30, sont en contact avec les rails de la voie ferroviaire F.

Ensuite, toujours en référence à la figure 9, les bras d'activation 70 de la première unité mobile 2 sont déplacés de manière à mettre les roues 41 des essieux 40 en position basse, c'est à dire, en contact avec les rails de la voie ferroviaire F comme illustré à la figure 10. Les chenilles 30 de l'unité mobile 2 ne sont alors plus en contact avec les rails mais surélevés par rapport à ces derniers. Autrement dit, les moyens de déplacement routier 3 sont inactifs tandis que les moyens de déplacement ferroviaire 4 sont actifs.

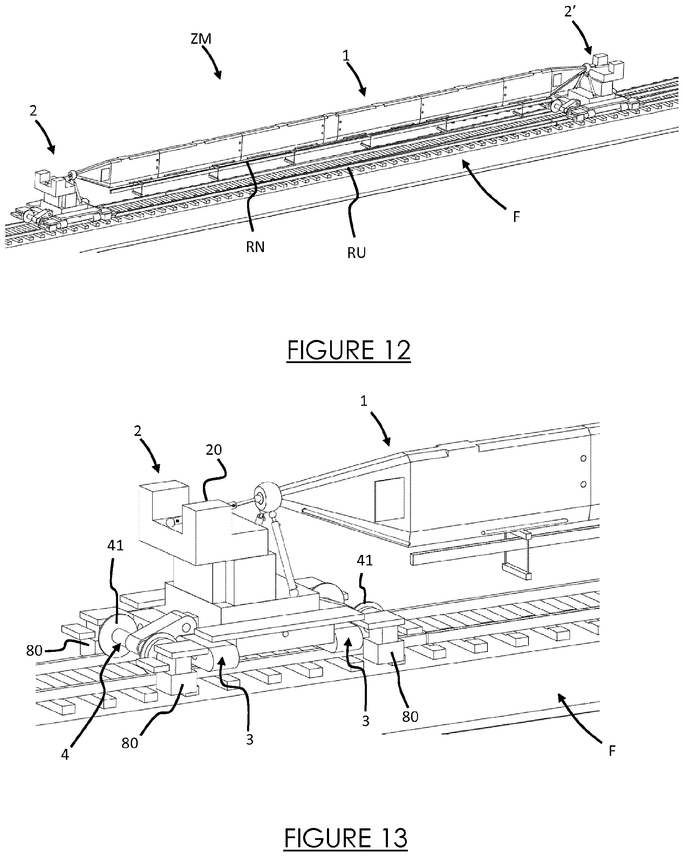

En référence aux figures 3 et 11, les unités mobiles 2, 2' sont déplacées de manière synchronisée sur la voie ferroviaire F grâce à leurs moyens de déplacement ferroviaire 4, 4' de manière à atteindre la zone de maintenance ZM dans laquelle un rail ferroviaire usé RU doit être remplacé comme illustré à la figure 12.

De manière avantageuse, la zone de stockage ZS peut être éloignée de la zone de maintenance ZM de plusieurs kilomètres. Ainsi, depuis une même zone de stockage ZS éloignée de la voie ferroviaire F, un grand nombre de rails ferroviaires usés RU peuvent être remplacés de manière pratique et aisée.

Lorsque le système de transport S arrive dans la zone de maintenance ZM, les unités mobiles 2, 2' se placent de manière à ce que la poutre structurale 1 s'étende au-dessus du rail ferroviaire usé RU comme illustré à la figure 12.

Ensuite, chaque unité mobile 2, 2' active ses vérins de stabilisation 80 afin que ni les moyens de déplacement routier 3 ni les moyens de déplacement ferroviaire 4 ne soient en contact avec les rails de la voie ferroviaire F. Dans cet exemple, les quatre vérins de stabilisation 80 de chaque unité mobile 2 sont activés pour surélever les roues ferroviaires 41 au-dessus de la voie ferroviaire F comme illustré à la figure 13. Ainsi, la position de chaque unité mobile 2, 2' est définie de manière précise et stable. Le remplacement du rail ferroviaire usé RU par le rail ferroviaire neuf RN peut ainsi débuter.

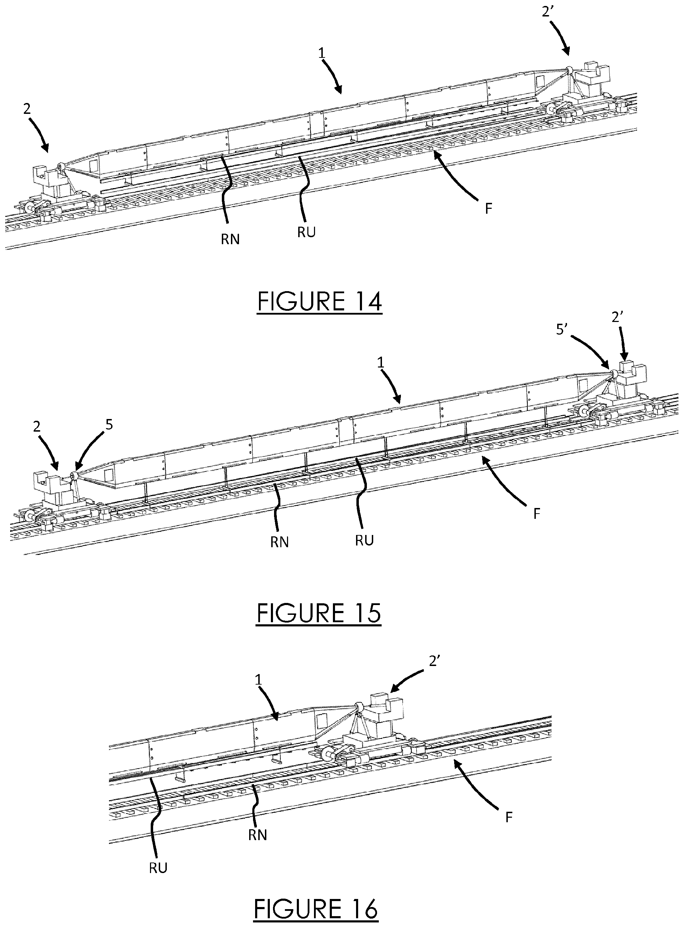

Après désolidarisation du rail ferroviaire usé RU de la voie ferroviaire F, la poutre structurale 1 est reliée par des opérateurs au rail ferroviaire usé RU afin que ce dernier soit supporté par la poutre structurale 1 comme illustré à la figure 14. Dans cet exemple, les moyens de liaison 13 de la poutre structurale 1 sont utilisés mais il va de soi que des moyens dédiés pourraient également être prévus. Ainsi, comme illustré à la figure 14, le système de transport 1 supporte de manière simultanée le rail ferroviaire neuf RN et le rail ferroviaire usé RU.

Ensuite, les organes de connexion 5, 5' des unités mobiles 2, 2' sont déplacés de manière à transporter le rail ferroviaire usé RU et le mettre en attente à proximité de la voie ferroviaire F.

Comme illustré à la figure 15, les organes de connexion 5, 5' des unités mobiles 2, 2' sont de nouveau déplacés de manière à placer le rail ferroviaire neuf RN en lieu et place du rail ferroviaire usé RU dans la voie ferroviaire F. La poutre structurale 1 permet une mise en place précise sans pénibilité pour les opérateurs. Le rail ferroviaire neuf RN est ensuite solidarisé à la voie ferroviaire F.

Par la suite, les organes de connexion 5, 5' des unités mobiles 2, 2' sont de nouveau déplacés pour transporter la poutre structurale 1 au-dessus du rail ferroviaire usé RU placé en attente afin de pouvoir le suspendre à ladite poutre structurale 1. Une fois le rail ferroviaire usé RU relié au système de transport S, les vérins de stabilisation 80 sont inactivés de manière à mettre de nouveau les roues ferroviaires 41 en contact avec les rails de la voie ferroviaire F. Ainsi, le rail ferroviaire usé RU peut être rapporté par le système de transport S à la zone de stockage ZS afin d'être recyclé.

De manière avantageuse, comme illustré à la figure 16, les unités mobiles 2, 2' se déplacent sur le rail ferroviaire neuf RN récemment installé pour atteindre la zone de stockage ZS.

Grâce à l'invention, le système de transport S peut être livré de manière pratique et rapide dans des zones de stockage ZS choisies par l'opérateur. Le temps de transport d'un rail ferroviaire est ainsi réduit par rapport à l'art antérieur dans lequel un train-travaux devait s'approvisionner en rails dans des lieux de stockage ferroviaires parfois très éloignés de la voie ferroviaire à renouveler.

Une même zone de stockage peut être utilisée pour le renouvellement de nombreux kilomètres de voie ferroviaire étant donné que le système de transport peut se déplacer sur toute voie ferroviaire, sans limitation technique et avec une grande flexibilité.

De manière incidente, une zone de stockage sécurisée peut être choisie afin de limiter le risque de vol et de dégradation. En outre, comme les rails ferroviaires neufs RN sont transportés un par un, aucun rail neuf n'est stocké à proximité des voies, ce qui limite le risque de vol.

Grâce au système de transport S, le rail ferroviaire neuf RN est déposé de manière précise et sécurisée sans risque d'endommagement dudit rail ferroviaire neuf RN. En outre, le système de transport S selon l'invention est une faible source de nuisance (peu de bruit, absence de fumées, etc.) par comparaison à un train travaux équipé d'une grue de levage.

De plus, seule la voie ferroviaire à renouveler est utilisée, les voies ferroviaires voisines n'étant avantageusement pas impactées. En outre, les opérateurs sont peu sollicités, ce qui diminue leur pénibilité et améliore la cadence de renouvellement d'une voie ferroviaire.

Il va de soi qu'un procédé analogue peut être utilisé pour le renouvellement d'autres types d'équipements, par exemple, des rails de protection pour route et autoroute.

## Revendications

1. Système de transport (S) d'un équipement, en particulier un rail ferroviaire (RN, RU), le système de transport (S) comprenant :
- au moins une poutre structurale (1) adaptée pour supporter un équipement, ladite poutre structurale (1) comportant un corps longitudinal (10) comprenant une première extrémité de connexion (11) et une deuxième extrémité de connexion (12) et des moyens de liaison (13) adaptés pour être reliés audit équipement, et
- au moins une première unité mobile (2) et une deuxième unité mobile (2') indépendantes, chaque unité mobile (2, 2') comportant un châssis (20, 20') et au moins un organe de connexion (5, 5'), monté mobile par rapport audit châssis (20, 20'), l'organe de connexion (5) de la première unité mobile (2, 2') et l'organe de connexion (5') de la deuxième unité mobile (2') étant adaptés pour se connecter respectivement à la première extrémité de connexion (11) et à la deuxième extrémité de connexion (12) de la poutre structurale (1) afin de la supporter, chaque unité mobile (2, 2') comprenant en outre des moyens de déplacement routier (3, 3') aptes à permettre le déplacement dudit châssis (20, 20') sur une route ou analogue, système **caractérisé par le fait que** chaque organe de connexion (5, 5') se présente sous la forme d'un anneau de connexion (50) dont l'ouverture est adaptée pour coopérer avec une extrémité de connexion (11, 12) de forme sensiblement sphérique de la poutre structurale (1).

2. Système selon la revendication 1, dans lequel, chaque unité mobile (2, 2') comportant des moyens de déplacement routier (3, 3'), chaque unité mobile (2, 2') comporte en outre des moyens de déplacement ferroviaire (4, 4') aptes à permettre le déplacement dudit châssis (20, 20') sur une voie ferroviaire (F).

3. Système selon l'une des revendications 1 à 2, dans lequel chaque unité mobile (2, 2') comporte un module de pilotage synchronisé apte à coordonner le déplacement de la deuxième unité mobile (2') par rapport au déplacement de la première unité mobile (2).

4. Système selon l'une des revendications 1 à 3, dans lequel chaque unité mobile (2, 2') comporte un module d'activation (7, 7') adapté pour déplacer les moyens de déplacement ferroviaire (4, 4') entre une position haute dans laquelle lesdits moyens de déplacement ferroviaire (4, 4') s'étendent au-dessus des moyens de déplacement routier (3, 3') et une position basse dans laquelle lesdits moyens de déplacement ferroviaire (4, 4') s'étendent en-dessous des moyens de déplacement routier (3, 3').

5. Système selon l'une des revendications 1 à 4, dans lequel chaque unité mobile (2, 2') comporte un module de stabilisation (8, 8') adapté pour surélever les moyens de déplacement routier (3, 3') et les moyens de déplacement ferroviaire (4, 4') par rapport au sol.

6. Procédé de transport d'un équipement ferroviaire (RN) depuis une zone de stockage (ZS), située en dehors d'une voie ferroviaire (F), jusqu'à une zone de maintenance (ZM) d'une voie ferroviaire (F) au moyen d'un système de transport (S) selon l'une des revendications 2 à 5, l'équipement ferroviaire (RN) étant relié à la poutre structurale (1), la poutre structurale (1) étant supportée à ses extrémités de connexion (11, 12) par les unités mobiles (2, 2'), le procédé comprenant :
∘ une étape de déplacement dudit équipement ferroviaire (RN) de la zone de stockage (ZS) jusqu'à la voie ferroviaire (F) grâce aux moyens de déplacement routier (3, 3') desdites unités mobiles (2, 2'), et
∘ une étape de déplacement dudit équipement ferroviaire (RN) sur la voie ferroviaire (F) jusqu'à la zone de maintenance (ZM) grâce aux moyens de déplacement ferroviaire (4, 4') desdites unités mobiles (2, 2').

7. Procédé de transport selon la revendication 6, comportant une étape de stabilisation de chaque unité mobile (2, 2') dans ladite zone de maintenance (ZM).

8. Procédé de transport selon l'une des revendications 6 à 7, comportant une étape de libération dudit équipement ferroviaire (RN) dans ladite zone de maintenance (ZM).

## Patentansprüche

1. System zum Transport (S) einer Ausrüstung, insbesondere einer Eisenbahnschiene (RN, RU), wobei das Transportsystem (S) umfasst:
- mindestens einen Strukturbalken (1), der zum Abstützen einer Ausrüstung geeignet ist, wobei der Strukturbalken (1) einen Längskörper (10) aufweist, umfassend ein erstes Kopplungsende (11) und ein zweites Kopplungsende (12) und Verbindungsmittel (13), die für eine Verbindung mit der Ausrüstung geeignet sind, und
- mindestens eine erste bewegliche Einheit (2) und eine zweite bewegliche Einheit (2'), die unabhängig sind, wobei jede bewegliche Einheit (2, 2') ein Gestell (20, 20') und mindestens ein in Bezug auf das Gestell (20, 20') beweglich angebrachtes Kopplungsorgan (5, 5') aufweist, wobei das Kopplungsorgan (5) der ersten beweglichen Einheit (2, 2') und das Kopplungsorgan (5') der zweiten beweglichen Einheit (2') für eine Kopplung jeweils am ersten Kopplungsende (11) und am zweiten Kopplungsende (12) des Strukturbalkens (1) geeignet sind, um ihn abzustützen, wobei jede bewegliche Einheit (2, 2') ferner Straßenverlagerungsmittel (3, 3') umfasst, die imstande sind, den Transport des Gestells (20, 20') auf einer Straße oder ähnlichem zu erlauben, wobei das System **dadurch gekennzeichnet ist, dass** jedes Kopplungsorgan (5, 5') in Form eines Kopplungsrings (50) vorliegt, dessen Öffnung zum Zusammenwirken mit einem etwa kugeligen Kopplungsende (11, 12) des Strukturbalkens (1) geeignet ist.

2. System nach Anspruch 1, wobei, wobei jede bewegliche Einheit (2, 2') Straßenverlagerungsmittel (3, 3') aufweist, jede bewegliche Einheit (2, 2') ferner Schienenverlagerungsmittel (4, 4') aufweist, die imstande sind, die Verlagerung des Gestells (20, 20') auf einem Schienenweg (F) zu erlauben.

3. System nach einem der Ansprüche 1 bis 2, wobei jede bewegliche Einheit (2, 2') ein synchronisiertes Lenkungsmodul aufweist, das imstande ist, die Verlagerung der zweiten beweglichen Einheit (2') in Bezug auf die Verlagerung der ersten beweglichen Einheit (2) zu koordinieren.

4. System nach einem der Ansprüche 1 bis 3, wobei jede bewegliche Einheit (2, 2') ein Aktivierungsmodul (7, 7') aufweist, das zum Verlagern der Schienenverlagerungsmittel (4, 4') zwischen einer hohen Position, in welcher sich die Schienenverlagerungsmittel (4, 4') oberhalb der Straßenverlagerungsmittel (3, 3') erstrecken, und einer niedrigen Position, in welcher sich die Schienenverlagerungsmittel (4, 4') unterhalb der Straßenverlagerungsmittel (3, 3') erstrecken, geeignet ist.

5. System nach einem der Ansprüche 1 bis 4, wobei jede bewegliche Einheit (2, 2') ein Stabilisierungsmodul (8, 8') aufweist, das zum Anheben der Straßenverlagerungsmittel (3, 3') und der Schienenverlagerungsmittel (4, 4') in Bezug auf den Boden geeignet ist.

6. Verfahren zum Transport einer Eisenbahnausrüstung (RN) ab einer Lagerzone (ZS), die sich außerhalb eines Schienenwegs (F) befindet, bis zu einer Wartungszone (ZM) eines Schienenwegs (F) mittels eines Transportsystems (S) nach einem der Ansprüche 2 bis 5, wobei die Eisenbahnausrüstung (RN) mit dem Strukturbalken (1) verbunden ist, wobei der Strukturbalken (1) an seinen Kopplungsenden (11, 12) von beweglichen Einheiten (2, 2') abgestützt ist, wobei das Verfahren umfasst:
∘ einen Verlagerungsschritt der Eisenbahnausrüstung (RN) von der Lagerzone (ZS) bis zu dem Schienenweg (F) dank der Straßenverlagerungsmittel (3, 3') der beweglichen Einheiten (2, 2'), und
∘ einen Verlagerungsschritt der Eisenbahnausrüstung (RN) auf dem Schienenweg (F) bis zu der Wartungszone (ZM) dank der Schienenverlagerungsmittel (4, 4') der beweglichen Einheiten (2, 2').

7. Transportverfahren nach Anspruch 6, aufweisend einen Stabilisierungsschritt jeder beweglichen Einheit (2, 2') in der Wartungszone (ZM).

8. Transportverfahren nach einem der Ansprüche 6 bis 7, aufweisend einen Freigabeschritt der Eisenbahnausrüstung (RN) in der Wartungszone (ZM).

## Claims

1. A system for transporting (S) an equipment, in particular a railway rail (RN, RU), the transporting system (S) comprising:
- at least one structural beam (1) adapted to support an equipment, said structural beam (1) including a longitudinal body (10) comprising a first connection end (11) and a second connection end (12) and joining means (13) adapted to be joined to said equipment, and
- at least one first movable unit (2) and a second movable unit (2') which are independent, each movable unit (2, 2') including a chassis (20, 20') and at least one connection member (5, 5'), movably mounted with respect to said chassis (20, 20'), the connection member (5) of the first movable unit (2, 2') and the connection member (5') of the second movable unit (2') being adapted to be respectively connected to the first connection end (11) and to the second connection end (12) of the structural beam (1) in order to support it, each movable unit (2, 2') further comprising road moving means (3, 3') able to enable said chassis (20, 20') to be moved on a road or the like, which system is **characterised in that** each connection member (5, 5') is in the form of a connection ring (50) the aperture of which is adapted to cooperate with a substantially spherical shaped connection end (11, 12) of the structural beam (1).

2. The system according to claim 1, wherein, each movable unit (2, 2') including road moving means (3, 3'), each movable unit (2, 2') further includes railway moving means (4, 4') able to enable said chassis (20, 20') to be moved on a rail track (F).

3. The system according to one of claims 1 and 2, wherein each movable unit (2, 2') includes a synchronised driving module able to coordinate the movement of the second movable unit (2') with respect to the movement of the first movable unit (2).

4. The system according to one of claims 1 to 3, wherein each movable unit (2, 2') includes an activation module (7, 7') adapted to move the railway moving means (4, 4') between a top position in which said railway moving means (4, 4') extend above the road moving means (3, 3') and a bottom position in which said railway moving means (4, 4') extend below the road moving means (3, 3').

5. The system according to one of claims 1 to 4, wherein each movable unit (2, 2') includes a stabilisation module (8, 8') adapted to raise the road moving means (3, 3') and the railway moving means (4, 4') with respect to the ground.

6. A method for transporting a railway equipment (RN) from a storage zone (ZS), located outside a rail track (F), to a maintenance zone (ZM) of a rail track (F) by means of a transporting system (S) according to one of claims 2 to 5, the railway equipment (RN) being joined to the structural beam (1), the structural beam (1) being supported at its connection ends (11, 12) by the movable units (2, 2'), the method comprising:
∘ a step of moving said railway equipment (RN) from the storage zone (ZS) to the rail track (F) thanks to the road moving means (3, 3') of said movable units (2, 2'), and
∘ a step of moving said railway equipment (RN) on the rail track (F) to the maintenance zone (ZM) thanks to the railway moving means (4, 4') of said movable units (2, 2').

7. The transporting method according to claim 6, including a step of stabilising each movable unit (2, 2') in said maintenance zone (ZM).

8. The transporting method according to one of claims 6 and 7, including a step of releasing said railway equipment (RN) in said maintenance zone (ZM).
